# EUROPÄISCHE PATENTSCHRIFT

(11) **EP 0 739 170 B1**
(45) Veröffentlichungstag und Bekanntmachung des Hinweises auf die Patenterteilung: **08.11.2000**
(21) Anmeldenummer: 95905550.0
(22) Anmeldetag: 13.01.1995
(51) Int. Cl.: A23L 1/31, A23K 1/18

(54) **VERFAHREN ZUM HERSTELLEN EINES STÜCKIGEN FLEISCHPRODUKTES**
PROCESS FOR PRODUCING A MEAT PRODUCT IN LUMPS
PROCEDE POUR LA PREPARATION D'UN PRODUIT A BASE DE VIANDE EN MORCEAUX

(30) Priorität: 09.02.1994 DE 4404083
(43) Veröffentlichungstag der Anmeldung: 30.10.1996
(73) Patentinhaber: EFFEM GmbH, D-27281 Verden/Aller (DE)
(72) Erfinder: EMBERGER, Harald, North Luffenham LE15 8JR (GB); SIEGMUND, Yvonne, D-27299 Langwedel-Hagen-Grinden (DE); LUTTMANN, Jürgen, D-27308 Kirchlinteln (DE); STEIN, Roland, D-27283 Verden (DE); KREGEL, Gebhard, D-27374 Visselhövede-Ottingen (DE); KALISCH, Peter, D-28219 Bremen (DE); PROTZ, Meinhard, D-29699 Bonlitz (DE); LANGEN, Theo, D-28844 Kirchweye (DE)
(74) Vertreter: Goddar, Heinz J., Dr.
(86) Internationale Anmeldenummer: DE9500054
(87) Internationale Veröffentlichungsnummer: WO9521541

(56) Entgegenhaltungen:
- EP-A- 0 533 959
- GB-A- 1 213 929
- GB-A- 2 132 974
- US-A- 3 677 167
- PATENT ABSTRACTS OF JAPAN vol. 016, no. 310 (C-0960) 8. Juli 1992 & JP,A,04 088 967 (TOSHIHIRO AOYAMA) 23. März 1992
- PATENT ABSTRACTS OF JAPAN vol. 008, no. 056 (C-214) 14. März 1984 & JP,A,58 212 768 (TSUJIKADO NAGOYA KK) 10. Dezember 1983

## Beschreibung

Die Erfindung betrifft ein Verfahren eines in einer Verpackung, wie Schalenpackung, Konservendose oder Folienpackung, abgefüllten, aus stückigem Fleischmaterial einerseits und einer Soße andererseits bestehenden Fleischproduktes, wie Tiernahrungsmittel, insbesondere für Heimtiere, bei dem Fleisch-Rohmaterial zu Fleischstücken zerkleinert, ebenso wie die Soße in das Packungsmaterial, wie ein Unterteil eines aus Unterteil und Oberteil bestehenden Behälters, eingebracht und schließlich das Packungsmaterial zu der im wesentlichen flüssigkeits- und gasdichten Verpackung verarbeitet wird, wobei ein Sterilisationsprozeß vorgesehen ist, dadurch gekennzeichnet, daß das Fleischmaterial, bestehend aus den Fleischstücken, und die Soße zu einem Formkörper formgepreßt und dieser in zumindest oberflächlich gefrorenem Zustand in das Packungsmaterial eingegeben wird.

Fleischprodukte der vorstehend beschriebenen Art, wie sie insbesondere als Heimtiernahrung für Katzen oder Hunde Verwendung finden, werden bislang beispielsweise so hergestellt, daß das Fleisch-Rohmaterial auf ca. -5°C abgekühlt und dann bei dieser Temperatur zerkleinert wird, woraufhin das aus den so hergestellten Fleischstücken, gegebenenfalls unter Zusatz vorgefertigter Formstücke auf Fleisch- und/oder Pflanzenbasis, bestehende Fleischmaterial in das Unterteil des Behälters, zum Beispiel einer bekannten Schalenpackung, welche z. B. durch Tiefziehen von beschichtetem Aluminiumblech hergestellt werden kann, eingefüllt wird. Sobald diese Festbestandteile in das Unterteil eingefüllt worden sind, wird die Soße zugegeben, ehe dann das Oberteil aufgesetzt und mit dem Unterteil im wesentlichen gas- und flüssigkeitsdicht. verbunden wird, z.B. durch Verwendung einer Deckelfolie. Es ist dabei auch bekannt, gegebenenfalls die Soße mit dem Fleischmaterial bereits vor dem Einbringen in das Unterteil zu vermischen. In jedem Fall gelangt die Soße, die bei dem bekannten Verfahren ebenso wie bei demjenigen nach der Erfindung diverse Zutaten enthalten kann, in flüssigem oder zumindest fließfähigem Zustand, mit mehr oder weniger hoher Viskosität, in das Unterteil.

Selbst dann, wenn eine exakte Volumen- oder Gewichtsdosierung des in das Unterteil einzubringenden Materials, aus einer stückigen und einer flüssigen Phase bestehend, vorgenommen wird, läßt es sich, insbesondere bedingt durch den hohen Durchsatz moderner Füllanlagen, nicht vermeiden, daß auf z.B. des Siegelrand des Unterteiles einer Schalenpackung Soßenspritzer gelangen, die dann beim anschließenden Versiegeln des Oberteiles mit dem Unterteil zu einer Undichtigkeit der betreffenden Verbindung führen, die für die Haltbarkeit des Fleischproduktes ungünstig ist.

Insbesondere hat es sich gezeigt, daß bei der bekannten Vorgehensweise infolge der an das Verschließen des Behälters stattfinden Wärmebehandlung beim Nachsterilisieren das stückige Aussehen des Behälterinhaltes leidet, weil am Übergang zwischen der flüssigen Soßen-Phase und der festen, stückigen Phase eine breiige Übergangszone ensteht, die den Behälterinhalt bzw. das Fleischprodukt gelegentlich als unansehnliche, gleichförmige Masse erscheinen läßt, während es an sich wünschenswert ist, daß die Stückigkeit des Fleischproduktes beim Öffnen des Behälters deutlich hervortritt, unter weitgehender Trennung der flüssigen und der festen Phase. Dieselbe nachteilige Erscheinung tritt auf, wenn als Verpackung nicht ein fester Behälter verwendet wird, sondern beispielsweise eine Folienpackung.

Aus der EP-A-0 533 959 ist ein Verfahren bekannt, bei dem gekochte, anschließend scharf abgekühlte oder gefrorene Fleischstücke mit Soße in Gelform vermischt und mit einer Standardeinrichtung formgepreßt, zu Blöcken gefroren und anschließend in Schalen verpackt werden. Die vorstehend geschilderten Probleme werden durch dieses bekannte Verfahren nicht oder nur unzureichend gelöst.

Der Erfindung liegt die Aufgabe zugrunde, das Verfahren der gattungsgemäßen Art dahingehend weiterzubilden, daß das stückige Erscheinungsbild des Fleischproduktes verbessert und die Dichtigkeit der Verpackung erhöht wird, wobei insgesamt die Herstellungs- und Materialkosten niedrig sein sollen.

Erfindungsgemäß wird diese Aufgabe dadurch gelöst, daß das Fleischmaterial, bestehend aus den Fleischstücken, und die Soße zu einem Formkörper formgepreßt und dieser in zumindest oberflächlich gefrorenem Zustand in das Packungsmaterial eingegeben wird, und daß die Verpackung nach dem Herstellen eines im wesentlichen gas- und flüssigkeitschichten Verschlusses einer Nachsterilisation unter Anwendung von Druck und Wärme unterworfen wird.

Dabei kann vorgesehen sein, daß das Fleisch-Rohmaterial in gefrorener Form zu den Fleischstücken zerkleinert und sowohl das aus diesen bestehende Fleischmaterial als auch die Soße, letztere in Granulatform, in gefrorenem, festen, quasi-trockenen Zustand zu einem Formkörper formgepreßt und als solcher in gefrorenem, festen, quasi-trockenen Zustand in das Packungsmaterial eingebracht werden.

In einer Ausführungsform der Erfindung ist vorgesehen, daß den Fleischstücken zur Bildung des Fleischmaterials vorgefertigte Formstücke auf Fleisch- oder Pflanzenbasis zugesetzt werden.

Auch schlägt die Erfindung vor, daß das Fleischmaterial und das Soßengranulat beim Formpressen auf einer Temperatur von ca. -3°C gehalten werden.

Dabei kann vorgesehen sein, daß das Fleischmaterial und das Soßengranulat beim Formpressen auf einer Temperatur von ca. -5°C gehalten werden.

Die Erfindung gibt gegebenenfalls auch vor, daß die Temperatur des Formkörpers beim Einbringen in das Packungsmaterial unterhalb von -3°C, vorzugsweise bei ca. -5°C, liegt.

Auch kann nach der Erfindung vorgesehen sein, daß das Fleischmaterial und das Soßengranulat in gefrorenem, festen, quasi-trockenen Zustand miteinander vermischt werden.

Nach der Erfindung kann auch vorgesehen sein, daß bei Verwendung eines aus einem Unterteil und einem Oberteil bestehenden Behälters als Verpackung der Formkörper mit Außenabmessungen hergestellt wird, die exakt den Innenabmessungen des vorgefertigten Unterteiles entsprechen.

Die Erfindung schlägt dabei auch vor, daß das Formpressen des Formkörpers innerhalb des vorgefertigten Unterteiles erfolgt.

Auch kann nach der Erfindung vorgesehen sein, daß bei Verwendung eines aus einem Unterteil und einem Oberteil bestehenden Behälters als Verpackung das Unterteil in dem der Herstellung des Formkörpers dienenden Formpreßvorgang gleichzeitig mit diesem durch Formpressen oder Tiefziehen hergestellt wird.

Eine weitere Ausführungsform des Verfahrens nach der Erfindung ist dadurch gekennzeichnet, daß der Formkörper beim Formpreßvorgang mit einer Kunststoffhülle im wesentlichen gas- und/oder flüssigkeitsdicht umschlossen wird.

Die Erfindung sieht gegebenenfalls auch vor, daß zum Umschließen des Formkörpers ein Material verwendet wird, welches sich bei einer zum Sterilisieren geeigneten Temperatur zu einem Bestandteil des Fleischproduktes umwandelt.

Erfindungsgemäß ist auch vorgesehen, daß das mit dem Formkörper befüllte Unterteil des Behälters vor dem Verschließen einem Vakuumerzeugungsvorgang unterzogen wird.

Alternativ dazu kann auch vorgesehen sein, daß das mit dem Formkörper befüllte Unterteil des Behälters vor dem Verschließen mit einem Schutzgas, wie CO₂ oder N₂, begast wird.

Nach der Erfindung kann auch vorgesehen sein, daß das Soßengranulat aus Wasser und anderen Zutaten, wie Gewürzen und Feststoffen, sauerstofffrei hergestellt wird.

Nach der Erfindung kann ferner auch so vorgegangen werden, daß zum Herstellen des Soßengranulates ein Schutzgas, wie CO₂ oder N₂, verwendet wird.

Eine weitere Ausführungsform der Erfindung sieht vor, daß ein aus einer Trockenkomponente und Eiskristallen bestehendes zweikomponentiges Soßengranulat verwendet wird.

Der Erfindung liegt die überraschende Erkenntnis zugrunde, daß es gelingt, das bekannte Verfahren entscheidend im Sinne der Aufgabenstellung zu verbessern, indem die stückigen Bestandteile, also die feste Phase, des herzustellenden Fleischproduktes einerseits und die flüssige Phase andererseits, also die Fleischsoße, die neben Festbestandteilen auch Wasser enthalten kann, vorzugsweise in gefrorenem, festen, quasi-trockenen Zustand, gegebenenfalls nach entsprechendem Vermischen, gemeinsam zu einem Formkörper verpreßt werden, der bei Verwendung eines aus Oberteil und Unterteil bestehenden Behälters entweder exakt den Innenabmessungen eines vorgefertigten Unterteiles entspricht oder aber gleichzeitig mit diesem im Formpreßvorgang hergestellt wird. Der Formkörper wird dabei vorzugsweise noch in gefrorener Form in das Unterteil eingesetzt, wodurch, bei entsprechend genauer Volumen- oder Gewichtsdosierung der Einzelkomponenten, ein exakter Abstand des oberen Randes des Formkörpers vom Siegelrand des Unterteiles oder dergleichen gewährleistet werden kann. Jedwedes Verschmutzen des Siegelrandes oder dergleichen läßt sich auf diese Weise vermeiden, da keinerlei flüssige Materialien in das Unterteil eingefüllt werden. Dementsprechend läßt sich das Oberteil anschließend mit dem Unterteil unter Vermeidung jedweden Fremdkörpereinflusses zuverlässig verbinden.

In jedem Fall ist nach der Erfindung vorgesehen, daß das zu verpackende Abfüllgut, bestehend aus dem Fleischmaterial und der Soßenkomponente, geformt und entweder ganz oder lediglich an der Oberfläche durchgefroren und alsdann in das Packungsmaterial eingebracht wird, wobei z.B. im Fall einer Folienpackung auch vorgesehen sein kann, daß der Formkörper nicht, wie bei festem Verpackungsbestandteil, wie Unterteil eines Behälters, in den betreffenden Verpackungsbestandteil eingelegt, sondern lediglich in das Packungsmaterial, z.B. eine Verpackungsfolie, eingeschlagen und alsdann zur im wesentlichen flüssigkeits- und gasdichten Verpackung weiterverarbeitet wird.

Es hat sich gezeigt, daß durch das Vermischen der stückigen Phase und der - später - flüssigen, nämlich Soßen-Phase, in gefrorenem Zustand das Fleischprodukt auch nach anschließender Nachsterilisation beim Öffnen des Behälters ein erheblich verbessertes, ästhetisch und geschmacklich ansprechendes stückiges Aussehen hat, ganz anders, als dies bei der bekannten Vorgehensweise der Fall ist.

Von besonderem Vorteil ist es auch, daß nach der Erfindung ggf. ein im wesentlichen sauerstofffreies Soßengranulat verwendet werden kann, wodurch der Sauerstoffgehalt innerhalb der Verpackung herabgesetzt und somit die Haltbarkeit des Fleischproduktes gesteigert werden kann. Durch geeignete Verfahren können dabei "schneeflockenartige" Eiskristalle hergestellt werden, die einen idealen Formpreßvorgang gewährleisten.

Weitere Merkmale und Vorteile der Erfindung ergeben sich aus der nachfolgenden Beschreibung, in der ein Ausführungsbeispiel anhand der schematischen Zeichnung im einzelnen erläutert ist.
Dabei zeigt:
- Fig. 1: eine Vorrichtung zur Durchführung eines Ausführungsbeispieles des Verfahrens nach der Erfindung; und
- Fig. 2 a)-d): eine Einzelheit der Vorrichtung von Fig. 1 in verschiedenen Stufen des beschriebenen Ausführungsbeispieles des Verfahrens nach der Erfindung.

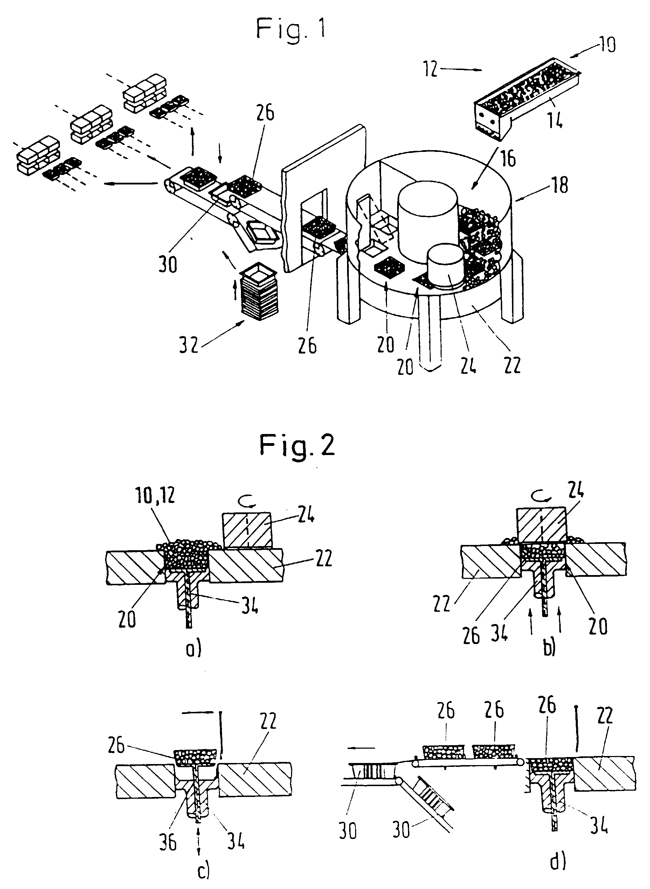

Wie Fig. 1 erkennen läßt, werden dort, symbolisiert, wie auch im folgenden, durch einen Pfeil bzw. entsprechende Pfeile, in gefrorenem Zustand (d.h. bei -4°C, bei dem gewählten Ausführungsbeispiel) stückiges Fleischmaterial 10, bestehend aus Fleischstücken, pflanzlichen Bestandteilen etc., sowie Soße, in Form eines Soßengranulates 12, in einen Puffermischer 14, ebenfalls auf -4°C befindlich, eingegeben. Aus dem Puffermischer 14 gelangen das Fleischmaterial und das Soßengranulat in Richtung des Pfeiles 16 in eine Formpreßeinrichtung 18, die mit einer Geschwindigkeit von 450 U/min rotiert und eine Anzahl von Formvertiefungen 20 aufweist, die sich in einer Drehplatte 22, welche mit der vorgenannten Geschwindigkeit umläuft, befinden und mit einem umfangsmäßig bezüglich der Drehplatte 22 ortsfesten rotierenden Drehmesser 24 zusammenwirken.

Die Formpreßeinrichtung 18 befindet sich in einem Raum mit einer Umgebungstemperatur von -4°C. Die durch die Formpreßeinrichtung 18 hergestellten Formkörper 26 passieren eine Temperaturschleuse 28, werden anschließend in Unterteile 30 von Schalenpackungen eingelegt, die von einem Magazin 32 her zugeführt werden, woraufhin dann eine Verteilung auf, beim gezeigten Ausführungsbeispiel von Fig. 1, drei Weiterverarbeitungslinien erfolgt, in denen die Unterteile 30 mittels einer entsprechenden Deckelfolie, das betreffende Behälter-Oberteil darstellen, versiegelt werden.

Wie Fig. 2 erkennen läßt, wird in Schritt a) des erfindungsgemäßen Verfahrens die Mischung aus Fleischmaterial 10 und Soßengranulat 12 auf einer Temperatur von -4°C befindlich, in die Formvertiefung 20 der Drehplatte 22 eingefüllt, wobei natürlich ein Teil der Füllung noch "gehäuft", in quasi-trockenem, festen Zustand, oberhalb der Formvertiefung 20 angeordnet ist.

In Schritt b) bewegt sich das gleichzeitig als Form-Gegenstempel dienende Drehmesser 24 über die Formvertiefung 20 und verschließt diese oben, zusammenwirkend mit der Drehplatte 22, so daß ein auf- und abwärts beweglicher Formstempel 34 beim Hochfahren den Formpreßvorgang bewerkstelligen und auf diese Weise den Formkörper 26 herstellen kann.

Im Schritt c) wird der Formkörper 26, der sich immer noch im gefrorenem Zustand befindet und in seinen Außenabmessungen nahezu exakt den Innenabmessungen des Unterteiles 30 entspricht, angehoben, wobei dies durch einen Innenstempel 36 bewerkstelligt wird, der innerhalb des Formstempels 34 höhenverschiebbar angeordnet ist, und in Richtung des gezeigten Pfeiles abtransportiert. Im Schritt d) werden dann die Formkörper 26 nacheinander mit den Unterteilen 30 zusammengeführt und in diese bündig eingelegt.

Anschließend erfolgt, zeichnerisch nicht dargestellt, das Versiegeln der Unterteile 30 mit den darin befindlichen Formkörpern 26 durch z.B. Heißsiegeln mittels einer Deckelfolie oder dergleichen.

Vor dem Verschließen der Unterteile 30 mit den darin befindlichen Formkörpern 26 können diese alternativ auch einem Vakuumerzeugungsvorgang oder einer Begasung mit Schutzgas, wie CO₂, N₂ unterzogen werden.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Verfahren zum Herstellen eines in einer Verpackung, wie Schalenpackung, Konservendose oder Folienpackung, abgefüllten, aus stückigem Fleischmaterial einerseits und einer Soße andererseits bestehenden Fleischproduktes, wie Tiernahrungsmittel, insbesondere für Heimtiere, bei dem Fleisch-Rohmaterial zu Fleischstücken zerkleinert, ebenso wie die Soße in das Packungsmaterial, wie ein Unterteil eines aus Unterteil und Oberteil bestehenden Behälters, eingebracht und schließlich das Packungsmaterial zu der im wesentlichen flüssigkeits- und gasdichten Verpackung verarbeitet wird, wobei ein Sterilisationsprozeß vorgesehen ist, dadurch gekennzeichnet, daß das Fleischmaterial, bestehend aus den Fleischstücken, und die Soße zu einem Formkörper formgepreßt und dieser in zumindest oberflächlich gefrorenem Zustand in das Packungmaterial eingegeben wird, und daß die Verpackung nach dem Herstellen eines gas- und flüssigkeitsdichten Verschlusses einer Nachsterilisation unter Anwendung von Druck und Wärme unterworfen wird.

2. Verfahren nach Anspruch 1, dadurch gekennzeichnet, daß das Fleisch-Rohmaterial in gefrorener Form zu den Fleischstücken zerkleinert und sowohl das aus diesen bestehende Fleischmaterial als auch die Soße, letztere in Granulatform, in gefrorenem, festen, quasitrockenen Zustand zu einem Formkörper formgepreßt und als solcher in gefrorenem, festen, quasi-trockenen Zustand in das Packungsmaterial eingebracht werden.

3. Verfahren nach Anspruch 1 oder 2, dadurch gekennzeichnet, daß den Fleischstücken zur Bildung des Fleischmaterials vorgefertigte Formstücke auf Fleisch- oder Pflanzenbasis zugesetzt werden.

4. Verfahren nach Anspruch 2 oder 3, dadurch gekennzeichnet, daß das Fleischmaterial und das Soßengranulat beim Formpressen auf einer Temperatur von ca. -3°C gehalten werden.

5. Verfahren nach Anspruch 4, dadurch gekennzeichnet, daß das Fleischmaterial und das Soßengranulat beim Formpressen auf einer Temperatur von ca. -5°C gehalten werden.

6. Verfahren nach einem der vorangehenden Ansprüche, dadurch gekennzeichnet, daß die Temperatur des Formkörpers beim Einbringen in das Packungsmaterial unterhalb von - 3°C, vorzugsweise bei ca. -5°C, liegt.

7. Verfahren nach einem der vorangehenden Ansprüche, dadurch gekennzeichnet, daß das Fleischmaterial und das Soßengranulat in gefrorenem, festen, quasi-trockenen Zustand miteinander vermischt werden.

8. Verfahren nach einem der vorangehenden Ansprüche, dadurch gekennzeichnet, daß bei Verwendung eines aus einem Unterteil und einem Oberteil bestehenden Behälters als Verpackung der Formkörper mit Außenabmessungen hergestellt wird, die exakt den Innenabmessungen des vorgefertigten Unterteiles entsprechen.

9. Verfahren nach Anspruch 7, dadurch gekennzeichnet, daß das Formpressen des Formkörpers innerhalb des vorgefertigten Unterteiles erfolgt.

10. Verfahren nach einem der Ansprüche 1 bis 6, dadurch gekennzeichnet, daß bei Verwendung eines aus einem Unterteil und einem Oberteil bestehenden Behälters als Verpackung das Unterteil in dem der Herstellung des Formkörpers dienenden Formpreßvorgang gleichzeitig mit diesem durch Formpressen oder Tiefziehen hergestellt wird.

11. Verfahren nach einem der vorangehenden Ansprüche, dadurch gekennzeichnet, daß der Formkörper beim Formpreßvorgang mit einer Kunststoffhülle oder dergleichen im wesentlichen gas- und/oder flüssigkeitsdicht umschlossen wird.

12. Verfahren nach Anspruch 10, dadurch gekennzeichnet, daß zum Umschließen des Formkörpers ein Material verwendet wird, welches sich bei einer zum Sterilisieren geeigneten Temperatur zu einem Bestandteil des Fleischproduktes umwandelt.

13. Verfahren nach einem der vorangehenden Ansprüche, dadurch gekennzeichnet, daß das mit dem Formkörper befüllte Unterteil des Behälters vor dem Verschließen einem Vakuumerzeugungsvorgang unterzogen wird.

14. Verfahren nach einem der Ansprüche 1 bis 12, dadurch gekennzeichnet, daß das mit dem Formkörper befüllte Unterteil des Behälters vor dem Verschließen mit einem Schutzgas, wie CO₂ oder N₂, begast wird.

15. Verfahren nach einem der vorangehenden Ansprüche, dadurch gekennzeichnet, daß das Soßengranulat aus Wasser und anderen Zutaten, wie Gewürzen und Feststoffen, sauerstoffrei hergestellt wird.

16. Verfahren nach Anspruch 15, dadurch gekennzeichnet, daß zum Herstellen des Soßengranulates ein Schutzgas, wie CO₂ oder N₂, verwendet wird.

17. Verfahren nach Anspruch 15 oder 16, dadurch gekennzeichnet, daß ein aus einer Trockenkomponente und Eiskristallen bestehendes zweikomponentiges Soßengranulat verwendet wird.

## Claims

1. Process for producing a meat product that is charged into a package, such as a tray pack, can or pouch, and consists firstly of piece-form meat material and secondly sauce, such as animal feed, in particular for pets, in which raw meat material is comminuted to meat pieces, introduced, as is the sauce, into the packaging material, such as the lower part of a container consisting of lower part and upper part, and finally the packaging material is processed to form the essentially liquid-tight and gas-tight package, a sterilization process being provided, characterized in that the meat material consisting of the meat pieces and the sauce is compression-moulded to form a shaped body and this, in at least superficially frozen state, is introduced into the packaging material and in that the package, after producing a gas-tight and liquid-tight seal, is subjected to a post-sterilization employing pressure and heat.

2. Process according to Claim 1, characterized in that the raw meat material is comminuted in frozen form to form the meat pieces and both the meat material consisting of these and the sauce, the latter in granule form, are compression-moulded in the frozen, solid, semi-dry state to form a shaped body and are introduced into the packaging material as such in the frozen, solid, semi-dry state.

3. Process according to Claim 1 or 2, characterized in that, to form the meat material, prefabricated meat-based or vegetable-based shaped pieces are added to the meat pieces.

4. Process according to Claim 2 or 3, characterized in that the meat material and the sauce granules are kept at a temperature of approximately -3°C during the compression moulding.

5. Process according to Claim 4, characterized in that the meat material and the sauce granules are kept at a temperature of approximately -5°C during the compression moulding.

6. Process according to one of the preceding claims, characterized in that the temperature of the shaped body is below -3°C, preferably approximately -5°C, during the introduction into the packaging material.

7. Process according to one of the preceding claims, characterized in that the meat material and the sauce granules are mixed with one another in the frozen, solid, semi-dry state.

8. Process according to one of the preceding claims, characterized in that when a container consisting of a lower part and an upper part is used as packaging, the shaped body is produced with external dimensions which exactly correspond to the internal dimensions of the prefabricated lower part.

9. Process according to Claim 7, characterized in that the compression moulding of the shaped body is performed within the prefabricated lower part.

10. Process according to one of claims 1 to 6, characterized in that, when a container consisting of a lower part and an upper part is used as packaging, the lower part is produced by compression moulding or deep-drawing simultaneously with the shaped body in the compression moulding operation serving to produce the shaped body.

11. Process according to one of the preceding claims, characterized in that the shaped body is enclosed essentially gas-tightly and/or liquid-tightly by a plastic sleeve or the like during the compression moulding operation.

12. Process according to Claim 10, characterized in that, to enclose the shaped body, a material is used which, at a temperature suitable for the sterilization, converts to a constituent of the meat product.

13. Process according to one of the preceding claims, characterized in that the lower part of the container which is filled with the shaped body, prior to the sealing, is subjected to a vacuum generation process.

14. Process according to one of Claims 1 to 12, characterized in that the lower part of the container which is filled with the shaped body is, prior to the sealing, gas-purged with a protective gas, such as CO₂ or N₂.

15. Process according to one of the preceding claims, characterized in that the sauce granules are produced to be acid-free from water and other ingredients, such as seasonings and solids.

16. Process according to Claim 15, characterized in that a protective gas, such as CO₂ or N₂, is used to produce the sauce granules.

17. Process according to Claim 15 or 16, characterized in that two-component sauce granules consisting of a dry component and ice crystals are used.

## Revendications

1. Procédé de fabrication d'un produit à base de viande, tel que la nourriture pour animaux, en particulier pour animaux domestiques, composé de viande en morceaux, d'une part, et d'une sauce, d'autre part, et versé dans un emballage, tel qu'un emballage en coupe, une boite de conserve ou un emballage en feuille, dans lequel procédé la matière brute formée par la viande et découpée en morceaux, ainsi que la sauce sont introduits dans l'emballage, tel que la partie inférieure d'un récipient formé par une partie inférieure et une partie supérieure, et enfin l'emballage est traité pour former un emballage sensiblement étanche aux liquides et aux gaz, dans lequel procédé il est prévu un processus de stérilisation, caractérisé en ce que le matériau à base de viande, formé par les morceaux de viande, et la sauce sont moulés par compression pour former un corps moulé et celui-ci, à l'état gelé au moins en surface, est introduit dans l'emballage, et en ce que l'emballage, après la fabrication d'une fermeture étanche aux liquides et aux gaz, est soumis à une stérilisation ultérieure sous l'action de la pression et de la chaleur.

2. Procédé selon la revendication 1, caractérisé en ce que la matière brute formée par la viande est découpée en morceaux à l'état gelé, et non seulement le matériau à base de viande, mais aussi la sauce, cette dernière en forme de granulats, sont moulés par compression à l'état gelé, solide et quasi sec pour former un corps moulé et sont introduits en tant que tel à l'état gelé, solide et quasi sec dans l'emballage.

3. Procédé selon la revendication 1 ou 2, caractérisé en ce que, pour former la matière à base de viande, on ajoute aux morceaux de viande des morceaux moulés préfabriqués, à base de viande ou de légumes.

4. Procédé selon la revendication 2 ou 3, caractérisé en ce que la matière à base de viande et la sauce en granulats sont maintenus à une température de -3 °C environ pendant le moulage par compression.

5. Procédé selon la revendication 4, caractérisé en ce que la matière à base de viande et la sauce en granulats sont maintenus à une température de -5 °C environ pendant le moulage par compression.

6. Procédé selon l'une quelconque des revendications précédentes, caractérisé en ce que lors de l'introduction du corps moulé dans l'emballage, la température du corps moulé est maintenue en dessous de -3 °C, de préférence autour de -5 °C environ.

7. Procédé selon l'une quelconque des revendications précédentes, caractérisé en ce que la matière à base de viande et la sauce en granulats sont mélangés l'un à l'autre à l'état gelé, solide, quasi sec.

8. Procédé selon l'une quelconque des revendications précédentes, caractérisé en ce qu'en cas d'utilisation d'un récipient formé par une partie inférieure et une partie supérieure pour constituer l'emballage, le corps moulé est fabriqué avec des dimensions extérieures qui correspondent exactement aux dimensions intérieures de la partie inférieure préfabriquée.

9. Procédé selon la revendication 7, caractérisé en ce que le moulage par compression du corps moulé est réalisé à l'intérieur de la partie inférieure préfabriquée.

10. Procédé selon l'une quelconque des revendications 1 à 6, caractérisé en ce qu'en cas d'utilisation d'un récipient formé par une partie inférieure et une partie supérieure pour constituer l'emballage, la partie inférieure est fabriquée par moulage par compression ou emboutissage par le processus de moulage par compression, utilisé pour la fabrication du corps moulé, et en même temps que celui-ci.

11. Procédé selon l'une quelconque des revendications précédentes, caractérisé en ce que, pendant le processus de moulage par compression, le corps moulé est entouré par une enveloppe en matière plastique pour être sensiblement étanche aux liquides et aux gaz.

12. Procédé selon la revendication 10, caractérisé en ce que pour envelopper le corps moulé on utilise un matériau qui, en présence d'une température adaptée à la stérilisation, se transforme en une partie intégrante du produit à base de viande.

13. Procédé selon l'une quelconque des revendications précédentes, caractérisé en ce que la partie inférieure du récipient, remplie par le corps moulé, est soumise avant la fermeture à un processus d'obtention du vide.

14. Procédé selon l'une quelconque des revendications 1 à 12, caractérisé en ce que la partie inférieure du récipient, remplie par le corps moulé, est enveloppée avant la fermeture par un gaz protecteur, tel que le CO₂ ou le N₂.

15. Procédé selon l'une quelconque des revendications précédentes, caractérisé en ce que la sauce en granulats est fabriquée sans oxygène à partir d'eau et autres ingrédients, tels que des épices et des matières solides.

16. Procédé selon la revendication 15, caractérisé en ce que l'on utilise un gaz protecteur, tel que le CO₂ ou le N₂, pour la fabrication de la sauce en granulats.

17. Procédé selon la revendication 15 ou 16, caractérisé en ce que l'on utilise une sauce en granulats à base de deux composants formés par un composant déshydraté et des cristaux de glace.
